# FASCICULE DE BREVET EUROPEEN

(11) **EP 2 218 151 B1**
(45) Date de publication et mention de la délivrance du brevet: **10.07.2013**
(21) Numéro de dépôt: 08842786.9
(22) Date de dépôt: 13.10.2008
(51) Int. Cl.: H01S 3/00, H01S 3/23, G02B 26/06, G02B 27/46

(54) **PROCEDE ET DISPOSITIF POUR PROTEGER UN EQUIPEMENT LASER DE PUISSANCE, ET SYSTEME OPTIQUE DE LASER DE PUISSANCE METTANT EN OEUVRE UN TEL DISPOSITIF**
VERFAHREN UND EINRICHTUNG ZUM SCHUTZ EINER HOCHLEISTUNGSLASERVORRICHTUNG UND EINE SOLCHE EINRICHTUNG VERWENDENDES OPTISCHES HOCHLEISTUNGSLASERSYSTEM
METHOD AND DEVICE FOR PROTECTING A HIGH-POWER LASER APPARATUS AND HIGH-POWER-LASER OPTICAL SYSTEM EMPLOYING SUCH A DEVICE

(30) Priorité: 15.10.2007 FR 0758323
(43) Date de publication de la demande: 18.08.2010
(73) Titulaire: Imagine Optic, 91400 Orsay (FR); Amplitude Technologies, 91029 Evry (FR)
(72) Inventeur: LEVECQ, Xavier, F-91190 Gif sur Yvette (FR); RIBOULET, Gilles, F-91390 Morsang sur Orge (FR)
(74) Mandataire: Pontet, Bernard
(86) Numéro de dépôt international: PCT/FR2008/051857
(87) Numéro de publication internationale: WO 2009/053642

(56) Documents cités:
- US-A- 5 832 006
- US-A- 5 994 687
- US-A1- 2005 201 429
- SCHWARZ ET AL: "Low order adaptive optics on Z-Beamlet using a single actuator deformable mirror" OPTICS COMMUNICATIONS, NORTH-HOLLAND PUBLISHING CO. AMSTERDAM, NL, vol. 264, no. 1, 1 août 2006 (2006-08-01), pages 203-212, XP005567434 ISSN: 0030-4018
- "HiPER technical report - Baseline Facility Design"[Online] 1 août 2007 (2007-08-01), pages 101-123, XP002476826 Extrait de l'Internet: URL:http://www.hiper-laser.org/docs/tdr/ba selinelaser.pdf> [extrait le 2008-04-16]

## Description

La présente invention concerne un procédé pour protéger un équipement laser de puissance. Elle vise également un dispositif de protection mettant en oeuvre ce procédé, ainsi qu'un système optique à laser de puissance mettant en oeuvre un tel dispositif.

Le domaine de l'invention est celui des lasers de puissance, et plus particulièrement des lasers ultra-intenses.

Les équipements à base de laser ultra-intenses sont soumis à des risques d'endommagement. Ces risques sont de deux types :
- Lors de l'amplification de l'impulsion : lorsque la répartition d'énergie de l'impulsion incidente sur un amplificateur n'est pas uniforme, et contient des « points chauds », l'interaction avec le cristal engendre un risque très important d'endommagement. Ces endommagements entraînent l'arrêt du laser et la nécessité du remplacement des optiques endommagées : cela implique donc des délais et des coûts pouvant s'élever à plusieurs dizaines de milliers d'euros lorsque les éléments endommagés sont les cristaux d'amplificateurs ou les réseaux de compression.
- Le retour du faisceau des expériences : il n'est pas rare qu'une partie de la lumière réfléchie ou générée lors de l'interaction du faisceau laser avec la cible expérimentale retourne dans le laser et se retrouve elle même amplifiée. Ce phénomène, non maîtrisé et dépendant du type de cible et de sa géométrie, entraîne, lorsqu'il se produit, un risque élevé d'endommagement des éléments optiques de la chaîne laser.

### Etat de l'art

On connaît dans l'art antérieur l'article « Low order adaptive optics on Z-Beamlet using a single actuator deformable mirror », OPTICS COMMUNICATION, NORTH-HOLLAND PUBLISHING CO. AMSTERDAM, NL, vol. 264, no. 1, 1er août 2006 (2006-08-01), pages 203-212. L'article divulgue un système optique à laser de puissance, comprenant des moyens pour générer un faisceau laser, des moyens pour amplifier ledit faisceau laser, des moyens pour filtrer spatialement ledit faisceau laser amplifié, des moyens pour focaliser ledit faisceau filtré spatialement sur une cible, des moyens de correction de phase en amont desdits moyens de filtrage spatial et des moyens de mesure d'aberration du faisceau disposés en aval desdits moyens de filtrage spatial, lesdits moyens de correction de phase du faisceau étants commandés de façon à produire un faisceau présentant des aberrations minimisées.

La solution couramment utilisée pour faire face aux risques d'endommagement est l'utilisation d'un filtrage spatial situé dans un plan de focalisation se trouvant devant chacun des amplificateurs ou éléments optiques sensibles à protéger [1]. Plus la dimension du filtre spatial (diaphragme de tout type) est petite vis à vis de la diffraction du faisceau, plus son utilisation est efficace pour réduire les risques d'endommagement. En contre partie, plus la dimension du filtre spatial est petite, plus la perte en énergie du faisceau incidente est importante, en particulier lorsque ce dernier possède des aberrations optiques et n'est pas limité par la diffraction. De plus, lorsque la puissance du faisceau augmente au fur et à mesure du passage dans les amplis, la fluence du faisceau au point de focalisation (dans le plan du trou de filtrage) devient de plus en plus forte, et la partie de l'énergie qui est bloquée par le trou de filtrage (car le faisceau n'est pas limité par la diffraction à cause des aberrations) peut entraîner la formation d'un plasma et la destruction du trou (plasma puis fusion et bouchage du trou).

Ainsi, dans la réalité, les spécialistes des lasers utilisent, sur les lasers de puissance, des trous de filtrage de diamètre important comparé à la limite de diffraction et ceci pour deux raisons : éviter de perdre trop de flux et pour protéger le trou de la destruction à chaque tir. Dès lors, ni l'homogénéisation de la répartition d'énergie en entrée des amplificateurs, ni la protection vis à vis des retours du faisceau de la cible ne sont optimales. Ainsi, la technique du trou de filtrage utilisée couramment ne répond pas de façon satisfaisante aux problèmes de protections des éléments optiques des lasers.

Les trous de filtrage utilisés communément sont des disques métalliques plats avec un trou calibré au centre, montés sur un mouvement de précision sur les trois axes pour les aligner sur l'axe optique du faisceau laser. Cette solution présente l'inconvénient de créer un plasma sur les bords du disque qui finit par le détruire, si l'énergie déposée atteint le seuil de dommage. En plus le seuil de dommage du disque dépend fortement de la qualité optique de la surface. Sur les systèmes ultra-intenses et ultra-brefs, à partir de quelques Hz de récurrence, et à partir des énergies en entrée de quelques centaines de milliJoules, le trou de filtrage est endommagé de manière irréversible. La solution proposée pour filtrer à forte fluence est d'utiliser des trous, métalliques ou diélectriques, de forme conique, pour augmenter la surface d'interaction entre les faisceaux à rejeter et le filtre spatial. Le matériau de composition du trou de filtrage implique différents schémas de filtrage et comportements du point de vue de la tenue au flux.

Les trous de filtrage coniques en métal [1,2] sont utilisés dans le chaînes laser à très basse récurrence type NIF et LMJ. Des trous de filtrage en forme de cône ont été validés sur plus de 500 tirs sur l'installation pilote du LMJ, la Ligne d'Intégration Laser (LIL). L'élimination des hautes fréquences spatiales est basée sur le principe de la déflection par le plasma sous-dense créé par l'interaction du faisceau avec les parois du cône. Une modélisation du trou et de l'effet de l'énergie déposée, contenue dans les hautes fréquences spatiales, est nécessaire car la détente du plasma conditionne la dynamique de la surface réfléchissante. Cette approche rend l'ingénierie du trou de filtrage très simple car le fait de déléguer le rôle de réflecteur au plasma permet de relaxer les contraintes sur la qualité des parois réfléchissantes du trou. Cette configuration n'a jamais été validée à forte récurrence. Le régime d'énergie de fonctionnement de ces trous doit être très bien défini et stable. La fluence incidente sur les parois du trou doit être suffisante pour créer un plasma, car une fluence trop basse ne ferait que déposer l'énergie et finirait par détruire le trou. D'autre part le plasma ne doit pas être trop dense, pour que le temps de détente ne soit pas trop rapide et le trou soit bouché, et une partie du faisceau soit coupée, comme par l'effet d'un obturateur rapide.

Sur des systèmes à 10Hz, le nombre de tirs reproductibles nécessaires pour valider le bon fonctionnement du trou augmente par rapport aux systèmes mono-coup de plusieurs ordres de grandeur, et pour cette raison d'autres solutions sont proposées, qui n'impliquent pas d'ablation de matière, aussi petite soit elle.

Les trous de filtrage diélectriques [3,4] sont une solution en réflexion qui réduit la déposition d'énergie dans le matériau, et qui est par conséquence moins limitée par la tenue au flux du matériau utilisé. Le champ effectif et la transmission dans le cas de la réflexion sur un diélectrique dépendent de la polarisation et de l'angle entre le faisceau incident et la normale à la surface, selon les formules de Fresnel. Dans ces conditions l'utilisation d'un trou conique en incidence rasante permet de nettoyer dans un filtre spatial sous vide des impulsions d'énergie considérablement plus élevées qu'avec la solution classique. La qualité microscopique de la surface du réflecteur conditionne la tenue au flux et les performances du trou, à cause des augmentations locales du champ électrique dues aux défauts.

Toutefois, les procédés actuels de protection ne donnent pas globalement satisfaction sur l'ensemble des régimes de fonctionnement d'équipements laser de puissance.

Le but de la présente invention est de proposer un procédé de protection permettant de limiter les risques d'endommagement sur un équipement de laser de puissance, et qui soit plus efficace que les procédés employés actuellement.

Cet objectif est atteint avec un procédé pour protéger un équipement de laser de puissance dans lequel un faisceau laser est généré puis amplifié dans au moins un premier étage d'amplification, comprenant un filtrage spatial dudit faisceau laser amplifié, une correction de phase effectuée sur le faisceau laser préalablement à son filtrage spatial, et une mesure des aberrations effectuée sur le faisceau laser.

Suivant l'invention, la correction de la phase du faisceau est commandée de façon à produire un faisceau présentant après filtrage spatial des aberrations minimisées.

Ainsi, en prévoyant une correction de phase en amont du trou de filtrage spatial, il devient possible de mieux contrôler la fonction de filtrage spatial et d'éviter la détérioration des équipements de puissance.

En effet, pour réaliser plus efficacement le rôle de protection des éléments optiques d'un laser de puissances et réduire les risques d'endommagement liées aux deux causes principales énoncées ci dessus, la présente invention revient à proposer la notion de fusible optique par l'association d'un trou de filtrage suffisamment petit pour réaliser une fonction de filtrage très efficace (typiquement inférieur à quelques fois la limite de diffraction, typiquement inférieur à 10) avec un système de correction de phase placé en amont du trou de filtrage dont la principale fonctionnalité est de permettre, en fonctionnement nominal, une focalisation du faisceau laser suffisamment proche de la tache idéale (proche de la limite par la diffraction) pour que la quasi totalité de l'énergie passe par le trou de filtrage.

Le rôle d'un trou de filtrage est :
- d'une part, de supprimer du front d'onde du faisceau laser l'ensemble des aberrations résiduelles à des fréquences spatiales susceptibles d'engendrer, par propagation, des points chauds sur le faisceau laser. Ces aberrations résiduelles sont des aberrations qui sont : soit générées par le laser en amont du système de correction et ne sont pas corrigeables par le système de correction (pas assez de degré de liberté dans l'élément correcteur par exemple), soit générées par l'élément correcteur lui même (exemple : l'effet d'empreinte d'un miroir déformable de type bimorphe). Ainsi le faisceau issu du trou de filtrage ne présente plus de risques d'endommagement par propagation des éléments optiques situés directement en aval ;
- d'autre part, de bloquer la majorité de l'éventuel flux lumineux en retour de la cible qui peut être lui même amplifié par les amplis situés entre la cible et le trou de filtrage. Plus le diamètre du trou de filtrage et petit meilleure est le blocage du flux en retour de la cible. Dans cette configuration, le trou de filtrage assure la protection des éléments optique amont (situé entre la génération du faisceau laser et le trou de filtrage).

Lorsque pour une raison quelconque (mauvais fonctionnement de laser sur un tir, mauvaise correction du système de correction...) les aberrations à des fréquences spatiales susceptibles d'engendrer, par propagation, des points chauds sont très importantes, la majorité du flux est bloqué par le trou qui protège de ce fait les éléments optique situés en aval. Dans certains cas, le flux bloqué par le trou filtrage peut provoquer sa destruction (fusion partielle et bouchage) : d'où la notion de fusible optique. Il faut alors changer le trou mais les éléments optiques fragiles et coûteux situés en aval ont été protégés.

Il est important de noter que le procédé de protection selon l'invention peut être mis en oeuvre avec un module de correction de phase dans lequel le faisceau laser effectue un seul passage, de sorte que ce module de correction de phase, le trou de filtrage et le module de mesure d'aberration constituent un ensemble homogène faisant fonction de fusible optique.

Par ailleurs, le procédé de protection selon l'invention trouve une application avantageuse pour des lasers de puissance à haute intensité, de récurrence supérieure à au moins 0.1 Hz.

Le système de correction du front d'onde est constitué d'un élément correcteur et d'un système de mesure des aberrations et d'un logiciel qui permet de calculer la commande à envoyer à l'élément correcteur en fonction de la réponse du système de mesure des aberrations. L'élément correcteur peut être un miroir déformable (de type bimorphe, monomorphe, à actionneurs piézo-électrique, à actionneurs mécaniques, à actionneurs électromagnétiques, à actionneurs électrostatiques, avec une membrane réfléchissante continue ou segmentée...) ou une valve à cristaux liquide (pixellisée ou non pixellisée) par exemple. Le système de mesure des aberrations peut être un analyseur de front d'onde de type Hartmann, Shack Hartmann, un analyseur de courbure, un interféromètre (de type « shearing » ou « point diffraction interferometry ») ou un simple détecteur matriciel placé sensiblement dans le plan de focalisation (ou une image de celui-ci) du faisceau.

Le dimensionnement du trou peut être effectué en fonction des capacités du miroir déformable, et le filtre spatial prend le relais du miroir déformable à partir des fréquences spatiales non corrigeables par le miroir déformable lui même.

Lorsqu'un problème, quelle qu'en soit l'origine, survient sur la phase du laser, le spot de focalisation au niveau du trou s'élargit : le trou de filtrage joue son rôle et bloque la majorité du flux incident. Si le problème est important, le flux incident sur les parois du trou peut être suffisamment puissant pour dégrader le trou au point de le boucher. Dans ce cas, aucune lumière ne peut plus le traverser et ce trou joue son rôle de protection (c'est la notion de fusible).

Cependant, il peut arriver que le problème soit suffisamment important pour qu'un flux conséquent soit bloqué par le trou qui se dégrade d'une façon non maîtrisée mais pas suffisamment pour le boucher. Dans ce cas, il est important de stopper le laser automatiquement et le plus rapidement possible pour protéger les éléments optiques du laser car on ne peut pas prédire l'effet d'une dégradation partielle du trou de filtrage sur le faisceau le traversant en partie.

A cette fin, on peut prévoir un système d'alarme de dégradation du trou de filtrage. Par exemple une caméra est positionnée de façon à imager le trou et détecter la diffusion de la lumière sur le bord du trou au premier problème. Ce système d'alarme peut alors remonter l'information de stop au niveau du contrôle commande du laser.

Pour assurer un asservissement de la correction de phase, la mesure d'aberrations peut être effectuée selon plusieurs options.

Dans une première option de réalisation, la mesure d'aberrations est effectuée avant le filtrage spatial du faisceau laser corrigé.

Dans une seconde option de réalisation, la mesure d'aberrations est effectuée après le filtrage spatial du faisceau laser corrigé. On peut alors prévoir une translation des moyens de filtrage spatial selon une direction sensiblement orthogonale à la direction du faisceau filtré spatialement, de façon à retirer les moyens de filtrage spatial du faisceau pour permettre une mesure des aberrations du front d'onde.

Dans une version avantageuse de l'invention, il est prévu un prélèvement d'une fraction du faisceau laser corrigé qui est ensuite soumise à une mesure d'aberrations.

Le filtrage spatial du faisceau laser est assuré par un trou de filtrage dont la dimension est avantageusement choisie de façon à supprimer du faisceau les aberrations à des fréquences spatiales susceptibles d'engendrer par propagation des surintensités importantes dans ce faisceau.

A titre d'exemple non limitatif, la dimension du trou de filtrage est choisie inférieure à sensiblement 10 fois la limite de diffraction du faisceau laser.

On peut aussi prévoir que le correcteur de la phase du faisceau laser soit placé à l'entrée d'un module d'amplification et le trou de filtrage placé en sortie de ce module d'amplification. Dans ce cas, l'analyseur est avantageusement placé en sortie du module d'amplification pour prendre en compte les aberrations liées à l'amplification.

Suivant un autre aspect de l'invention, il est proposé un dispositif pour protéger un équipement de laser de puissance comportant des moyens de génération d'un faisceau laser et des premiers moyens pour amplifier ce faisceau laser, ce dispositif comprenant des moyens de filtrage spatial recevant ledit faisceau laser, des moyens de correction de la phase du faisceau disposés en amont des moyens de filtrage spatial, et des moyens de mesure d'aberration disposés en aval des moyens de correction de phase.

Les moyens de correction de phase du faisceau sont commandés de façon à produire un faisceau présentant après filtrage spatial des aberrations minimisées.

Le dispositif de protection selon l'invention est de préférence doté de moyens pour observer les moyens de filtrage spatial de façon à détecter une dégradation de ces moyens de filtrage spatial.

Dans la première option de réalisation de l'invention, les moyens de mesure d'aberration sont disposés en amont des moyens de filtrage spatial.

Dans la seconde option de réalisation de l'invention, les moyens de mesure d'aberration sont disposés en aval des moyens de filtrage spatial. Dans cette option, le dispositif de protection selon l'invention est avantageusement équipé de moyens pour translater les moyens de filtrage spatial selon une direction sensiblement orthogonale à la direction du faisceau issu des moyens de filtrage spatial.

Dans une version avantageuse de l'invention, le dispositif de protection selon l'invention comprend en outre des moyens pour prélever une fraction du faisceau laser en aval des moyens de correction de phase et diriger cette fraction vers les moyens de mesure d'aberration.

Dans un mode de réalisation pratique d'un dispositif de protection selon l'invention, les moyens de correction de phase comprennent un miroir déformable qui peut être de type bimorphe, monomorphe ou une valve à cristaux liquide.

Le système de mesure des aberrations peut être un analyseur de type Hartmann, Shack Hartmann, à courbure, ou un interféromètre, ou même un simple détecteur matriciel.

Suivant encore un autre aspect de l'invention, il est proposé un système optique à laser de puissance, comprenant des moyens pour générer un faisceau laser, des moyens pour amplifier ledit faisceau laser, des moyens pour filtrer spatialement ledit faisceau laser, des moyens pour focaliser ce faisceau filtré spatialement sur une cible, des moyens de correction de phase en amont desdits moyens de filtrage spatial, et des moyens de mesure d'aberration du faisceau disposés en aval desdits moyens de correction de phase, caractérisé en ce que les moyens de correction de phase du faisceau sont commandés de façon à produire un faisceau présentant après filtrage spatial des aberrations minimisées.

Le procédé et le dispositif de protection selon l'invention peuvent être mis en oeuvre dans des équipements de protonthérapie ou dans des installations d'expérimentation à forte puissance laser crête, par exemple du niveau du Térawatt.

D'autres avantages et caractéristiques de l'invention apparaîtront à l'examen de la description détaillée d'un mode de mise en oeuvre nullement limitatif, et des dessins annexés sur lesquels :
- la figure 1 illustre schématiquement un système optique de puissance selon l'invention;
- la figure 2 illustre schématiquement une première option de réalisation d'un dispositif de protection selon l'invention ;
- la figure 3 illustre schématiquement une seconde option de réalisation d'un dispositif de protection selon l'invention ;
- la figure 4 illustre de façon plus détaillée un premier exemple de réalisation d'un dispositif de protection selon l'invention dans sa première option ; et
- la figure 5 illustre de façon plus détaillée un second exemple de réalisation d'un dispositif de protection selon l'invention dans sa seconde option.

On va maintenant décrire, en référence aux figures précitées, deux options de réalisation d'un dispositif de protection selon l'invention mis en oeuvre dans un système optique à laser de puissance.

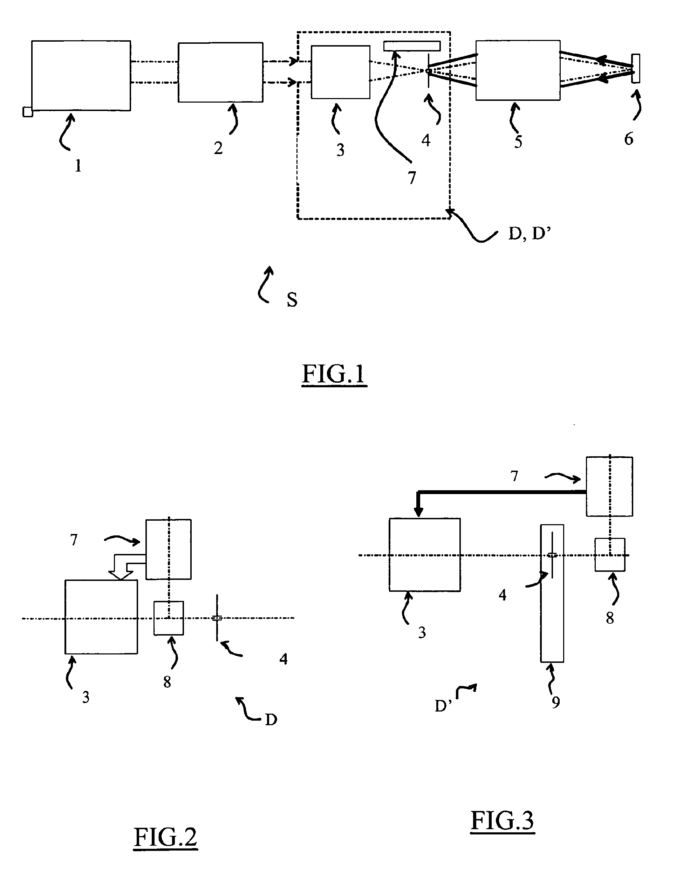

Un tel système optique S comprend, en référence à la figure 1, un module 1 de génération d'un faisceau laser, un module 2 d'amplification du faisceau, un dispositif D,D' de protection selon l'invention, et un module 5 d'amplification et/ou de compression et de focalisation vers une cible 6.

Il est a noter que pour plus de clarté, les miroirs, lentilles et autres afocaux de mise en forme et de transport du faisceau n'ont pas été représentés sur cette figure 1.

Le dispositif D, D' de protection selon l'invention comprend un module 3 de correction de phase disposé en aval du module d'amplification 2, un trou de filtrage spatial 4 disposé entre la sortie de ce module de correction 3 et l'entrée du module d'amplification 5, et un module de mesure d'aberration 7.

Dans une première option de réalisation de l'invention, le dispositif de protection D selon l'invention comprend, en référence à la figure 2, un équipement optique 8 pour prélever une fraction du faisceau issu du module de correction de phase 3 et pour diriger cette fraction de faisceau vers le module de mesure d'aberration 7 qui est ainsi disposé en amont du trou de filtrage spatial 4.

Dans une seconde option de réalisation de l'invention, le dispositif de protection D' selon l'invention comprend, en référence à la figure 3, un équipement optique 8 pour prélever une fraction du faisceau issu du trou de filtrage spatial 4 et pour diriger cette fraction de faisceau vers le module de mesure d'aberration 7 qui est ainsi disposé en aval du trou de filtrage spatial 4, ainsi qu'un équipement 9 de translation de ce trou de filtrage 4 pour permettre une mesure d'aberration directement sur le faisceau issu du module de correction de phase 3.

Le module de mesure d'aberration 7 délivre au module de correction de phase 3 les informations de mesure qui sont traitées par un module de calcul (non représenté) pour effectuer un asservissement des éléments de correction. Le module de calcul peut être un simple calculateur ou micro-ordinateur par exemple.

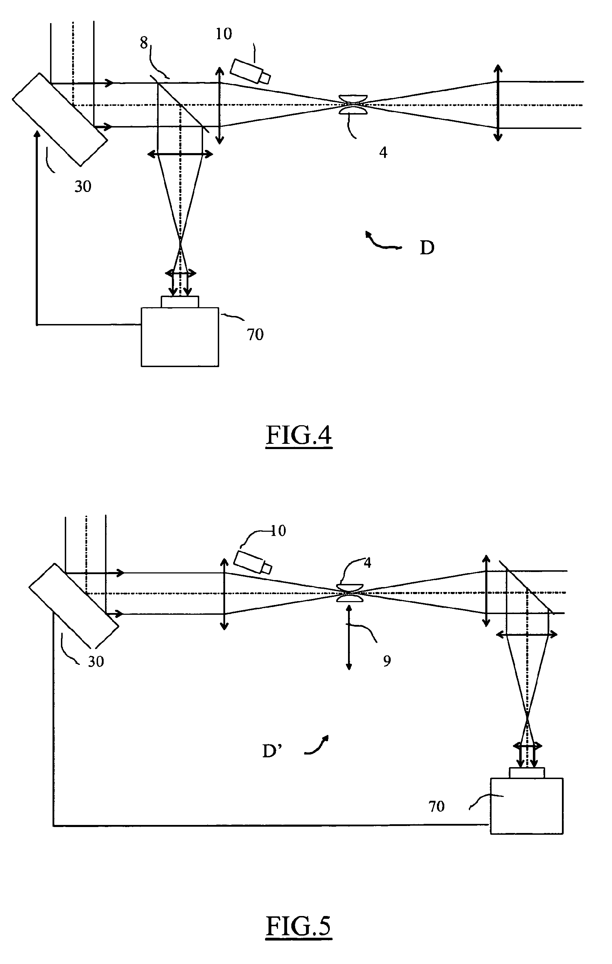

En référence à la figure 4, le module de correction de phase comprend un miroir déformable 30 commandé à partir d'informations fournies par un analyseur de front d'onde 70 qui reçoit, via un module de prélèvement 8 comprenant un miroir dichroïque, une fraction du faisceau issu du miroir déformable 30. Le dispositif de protection D comprend aussi une caméra 10 de visualisation du trou spatial, cette caméra étant prévue pour détecter une surexposition du trou spatial par le faisceau et pour commander le module de génération de faisceau 1. Le trou de filtrage 4 est par exemple du type diélectrique.

En référence à la figure 5, le module de prélèvement de faisceau 8 et l'analyseur de front d'onde 70 sont disposés en aval du trou de filtrage 4.

Bien sûr, l'invention n'est pas limitée aux exemples qui viennent d'être décrits et de nombreux aménagements peuvent être apportés à ces exemples sans sortir du cadre de l'invention. Ainsi, on peut prévoir d'autres modes de réalisation des différents modules de correction de phase, de mesure d'aberration et de prélèvement de faisceau.

### References:

[1] Murray J. E., Milam D., Boley C. D., Estabrook K. G., et Caird J.A. (2000) "Spatial filter pinhole development for the National Ignition Facility", Applied Optics, 39 (9), pp. 1405 - 1420
[2] Celliers P.M., Estabrook K. G., Wallace R. J., Murray J. E., Da Silva L. B., MacGowan B. J., Van Wonterghem B. M., et Manes K. R. (1998) "Spatial filter pinhole for high-energy pulsed lasers", Applied Optics, 37 (12), pp. 2371 - 2378
[3] Hach H. et Neuroth N. (1982) "Resistance of optical and colored glasses to 3-nsec laser pulses", Applied Optics, 21 (18), p. 3239 - 3248
[4] Kurnit N. A., Letzring S. A., Johnson R. P. (1999) "A high-damage-threshold pinhole for glass fusion laser application", Third Annual International Conference on Solid State Lasers for Application to Inertial Confinement Fusion, Proc. SPIE 3492, pp. 896 - 900

## Revendications

1. Procédé pour protéger un équipement de laser de puissance (S) dans lequel un faisceau laser est généré puis amplifié dans au moins un premier étage d'amplification, comprenant un filtrage spatial (4) dudit faisceau laser amplifié, une correction de phase (3) effectuée sur le faisceau laser préalablement à son filtrage spatial, et une mesure des aberrations (7) effectuée sur le faisceau laser après correction de sa phase, la correction de la phase du faisceau étant commandée de façon à produire un faisceau présentant après filtrage spatial des aberrations minimisées, **caractérisé en ce que** la mesure d'aberrations (7) est effectuée avant le filtrage spatial (4) du faisceau laser.

2. Procédé pour protéger un équipement de laser de puissance (S) dans lequel un faisceau laser est généré puis amplifié dans au moins un premier étage d'amplification, comprenant un filtrage spatial (4) dudit faisceau laser amplifié, une correction de phase (3) effectuée sur le faisceau laser préalablement à son filtrage spatial, et une mesure des aberrations (7) effectuée sur le faisceau laser ,la correction de aprés le filtrage spatial (4) du faisceau laser la phase du faisceau étant commandée de façon à produire un faisceau présentant après filtrage spatial des aberrations minimisées, **caractérisé en ce que** du faisceau le procédé comprend en outre une translation (9) de moyens de filtrage spatial (4) selon une direction sensiblement orthogonale à la direction du faisceau filtré spatialement, de sorte que lesdits moyens de filtrage spatial (4) sont retirés dudit faisceau pour permettre une mesure des aberrations (7) du front d'onde.

3. Procédé de protection selon la revendication 1 ou 2, **caractérisé en ce qu'**il comprend en outre un prélèvement (8) d'une fraction du faisceau laser corrigé qui est ensuite soumise à une mesure d'aberrations (7).

4. Procédé de protection selon l'une quelconque des revendications précédentes, **caractérisé en ce que** le filtrage spatial (4) du faisceau laser est assuré par un trou de filtrage dont la dimension est choisie de façon à supprimer dudit faisceau les aberrations à des fréquences spatiales susceptibles d'engendrer par propagation des surintensités dans ledit faisceau.

5. Procédé de protection selon la revendication 4, **caractérisé en ce que** la dimension du trou de filtrage (4) est choisie inférieure à sensiblement 10 fois la limite de diffraction du faisceau laser.

6. Procédé de protection selon l'une quelconque des revendications 4 ou 5, **caractérisé en ce qu'**il comprend en outre une détection d'une dégradation du trou de filtrage.

7. Dispositif (D, D') pour protéger un équipement de laser de puissance (S) comportant des moyens (1) de génération d'un faisceau laser et des premiers moyens (2) pour amplifier ce faisceau laser, ce dispositif comprenant des moyens de filtrage spatial (4) recevant ledit faisceau laser amplifié, des moyens (3) de correction de la phase du faisceau disposés en amont desdits moyens de filtrage spatial (4), des moyens (7) de mesure d'aberration disposés en aval desdits moyens de correction de phase (3), et des moyens de commande desdits moyens (3) de correction de phase du faisceau, de façon à produire un faisceau présentant après filtrage spatial des aberrations minimisées, **caractérisé en ce que** les moyens de mesure d'aberration (7) sont disposés en amont des moyens de filtrage spatial (4).

8. Dispositif (D, D') pour protéger un équipement de laser de puissance (S) comportant des moyens (1) de génération d'un faisceau laser et des premiers moyens (2) pour amplifier ce faisceau laser, ce dispositif comprenant des moyens de filtrage spatial (4) recevant ledit faisceau laser amplifié, des moyens (3) de correction de la phase du faisceau disposés en amont desdits moyens de filtrage spatial (4), des moyens (7) de mesure d'aberration disposés en aval des moyens de filtrage spatial (4) et des moyens de commande desdits moyens (3) de correction de phase du faisceau, de façon à produire un faisceau présentant après filtrage spatial des aberrations minimisées, **caractérisé en ce que** le dispositif comprend en outre des moyens (9) pour translater les moyens de filtrage spatial (4) selon une direction sensiblement orthogonale à la direction du faisceau issu desdits moyens de filtrage spatial (4).

9. Dispositif de protection (D, D') selon l'une quelconque des revendications 7 ou 8, **caractérisé en ce qu'**il comprend en outre des moyens (10) pour détecter une dégradation des moyens de filtrage spatial.

10. Dispositif de protection selon la revendication 9, **caractérisé en ce que** les moyens de détection de dégradation (10) comprennent une caméra de visualisation des moyens de filtrage spatial.

11. Dispositif de protection (D, D') selon l'une quelconque des revendications 7 à 10, **caractérisé en ce qu'**il comprend en outre des moyens (8) pour prélever une fraction du faisceau laser en aval desdits moyens de correction de phase (2) et diriger ladite fraction vers les moyens de mesure d'aberration (7).

12. Dispositif de protection (D, D') selon l'une quelconque des revendications 7 à 11, **caractérisé en ce que** les moyens de correction de phase (3) comprennent un miroir déformable (30).

13. Dispositif de protection selon l'une des revendications 7 à 10, **caractérisé en ce que** les moyens de correction de phase sont disposés en entrée de moyens d'amplification et les moyens de filtrage spatial et les moyens de mesure d'aberration sont disposés en sortie desdits moyens d'amplification.

14. Système optique à laser de puissance (S), comprenant des moyens (1) pour générer un faisceau laser, des moyens (2) pour amplifier ledit faisceau laser, des moyens (4) pour filtrer spatialement ledit faisceau laser amplifié, des moyens (5) pour focaliser ledit faisceau filtré spatialement sur une cible (6), des moyens (3) de correction de phase en amont desdits moyens de filtrage spatial (4), des moyens (7) de mesure d'aberration du faisceau disposés en aval desdits moyens de correction de phase (3), et des moyens de commande desdits moyens de correction de phase du faisceau de façon à produire un faisceau présentant après filtrage spatial des aberrations minimisées, **caractérisé en ce que** les moyens de mesure d'aberration (7) sont disposés en amont des moyens de filtrage spatial (4).

15. Système optique à laser de puissance (S), comprenant des moyens (1) pour générer un faisceau laser, des moyens (2) pour amplifier ledit faisceau laser, des moyens (4) pour filtrer spatialement ledit faisceau laser amplifié, des moyens (5) pour focaliser ledit faisceau filtré spatialement sur une cible (6), des moyens (3) de correction de phase en amont desdits moyens de filtrage spatial (4), des moyens (7) de mesure d'aberration du faisceau disposés en aval des moyens de filtrage spatial (4) , et des moyens de commande desdits moyens de correction de phase du faisceau de façon à produire un faisceau présentant après filtrage spatial des aberrations minimisées, **caractérisé en ce que** système comprend en outre des moyens (9) pour translater les moyens de filtrage spatial (4) suivant une direction sensiblement orthogonale à la direction du faisceau traversant lesdits moyens de filtrage spatial (4).

16. Système (S) selon la revendication 14 ou 15, **caractérisé en ce qu'**il comprend en outre des moyens pour amplifier le faisceau laser issu des moyens de filtrage spatial.

17. Système (S) selon l'une quelconque des revendications 14 à 16, **caractérisé en ce qu'**il comprend en outre des moyens pour comprimer temporellement le faisceau laser issu des moyens de filtrage spatial.

18. Système (S) selon l'une des revendications 14 à 17, **caractérisé en ce qu'**il comprend en outre des moyens (10) pour détecter une dégradation des moyens de filtrage spatial.

19. Système (S) selon l'une quelconque des revendications 14 à 18, **caractérisé en ce qu'**il comprend en outre des moyens (8) pour prélever une fraction du faisceau laser en aval desdits moyens de correction de phase (3), et pour diriger cette fraction prélevée vers les moyens de mesure d'aberration (7).

20. Mise en oeuvre du procédé de protection selon l'une quelconque des revendications 1 à 6, dans un équipement de protonthérapie.

21. Mise en oeuvre du procédé de protection selon l'une quelconque des revendications 1 à 6, dans une installation d'expérimentation à forte puissance crête.

## Patentansprüche

1. Verfahren zum Schutz einer Leistungslasereinrichtung (S), bei dem ein Laserstrahl erzeugt, anschließend in wenigstens einer ersten Verstärkungsstufe verstärkt wird, umfassend eine räumliche Filterung (4) des verstärkten Laserstrahls, eine Phasenkorrektur (3), die an dem Laserstrahl vor seiner räumlichen Filterung durchgeführt wird, sowie eine Messung der Aberrationen (7), die an dem Laserstrahl nach Korrektur seiner Phase durchgeführt wird, wobei die Korrektur der Phase des Strahls derart gesteuert wird, dass ein Strahl erzeugt wird, der nach der räumlichen Filterung minimierte Aberrationen aufweist, **dadurch gekennzeichnet, dass** die Aberrationsmessung (7) vor der räumlichen Filterung (4) des Laserstrahls durchgeführt wird.

2. Verfahren zum Schutz einer Leistungslasereinrichtung (S), bei dem ein Laserstrahl erzeugt, anschließend in wenigstens einer ersten Verstärkungsstufe verstärkt wird, umfassend eine räumliche Filterung (4) des verstärkten Laserstrahls, eine Phasenkorrektur (3), die an dem Laserstrahl vor seiner räumlichen Filterung durchgeführt wird, sowie eine Messung der Aberrationen (7), die an dem Laserstrahl nach der räumlichen Filterung (4) des Laserstrahls durchgeführt wird, wobei die Korrektur der Phase des Strahls derart gesteuert wird, dass ein Strahl erzeugt wird, der nach der räumlichen Filterung minimierte Aberrationen aufweist, **dadurch gekennzeichnet, dass** das Verfahren ferner ein Verschieben (9) von Mitteln zur räumlichen Filterung (4) in einer zu der Richtung des räumlich gefilterten Strahls im Wesentlichen orthogonalen Richtung umfasst, so dass die Mittel zur räumlichen Filterung (4) von dem Strahl entfernt werden, um eine Messung der Aberrationen (7) der Wellenfront zu ermöglichen.

3. Schutzverfahren nach Anspruch 1 oder 2, **dadurch gekennzeichnet, dass** es ferner eine Entnahme (8) eines Anteils des korrigierten Laserstrahls umfasst, der anschließend einer Aberrationsmessung (7) unterzogen wird.

4. Schutzverfahren nach einem der vorhergehenden Ansprüche, **dadurch gekennzeichnet, dass** die räumliche Filterung (4) des Laserstrahls durch ein Filterloch sichergestellt wird, dessen Abmessung derart gewählt ist, dass aus dem Strahl die Aberrationen mit Raumfrequenzen, welche in der Lage sind, durch Ausbreitung in dem Strahl Überströme zu erzeugen, beseitigt werden.

5. Schutzverfahren nach Anspruch 4, **dadurch gekennzeichnet, dass** die Abmessung des Filterlochs (4) kleiner als im Wesentlichen das 10-fache der Beugungsgrenze des Laserstrahls gewählt ist.

6. Schutzverfahren nach einem der Ansprüche 4 oder 5, **dadurch gekennzeichnet, dass** es ferner eine Erfassung einer Beschädigung des Filterlochs umfasst.

7. Vorrichtung (D, D') zum Schutz einer Leistungslasereinrichtung (S), umfassend Mittel (1) zur Erzeugung eines Laserstrahls sowie erste Mittel (2) zum Verstärken dieses Laserstrahls, wobei diese Vorrichtung Mittel zur räumlichen Filterung (4), die den verstärkten Laserstrahl empfangen, Mittel (3) zur Korrektur der Phase des Strahls, die den Mitteln zur räumlichen Filterung (4) vorgeschaltet sind, Mittel (7) zur Aberrationsmessung, die den Phasenkorrekturmitteln (3) nachgeschaltet sind, sowie Mittel zur Steuerung der Mittel (3) zur Phasenkorrektur des Strahls umfasst, um einen Strahl zu erzeugen, der nach der räumlichen Filterung minimierte Aberrationen aufweist, **dadurch gekennzeichnet, dass** die Mittel zur Aberrationsmessung (7) den Mitteln zur räumlichen Filterung (4) vorgeschaltet sind.

8. Vorrichtung (D, D') zum Schutz einer Leistungslasereinrichtung (S), umfassend Mittel (1) zur Erzeugung eines Laserstrahls sowie erste Mittel (2) zum Verstärken dieses Laserstrahls, wobei diese Vorrichtung Mittel zur räumlichen Filterung (4), die den verstärkten Laserstrahl empfangen, Mittel (3) zur Korrektur der Phase des Strahls, die den Mitteln zur räumlichen Filterung (4) vorgeschaltet sind, Mittel (7) zur Aberrationsmessung, die den Mitteln zur räumlichen Filterung (4) nachgeschaltet sind, sowie Mittel zur Steuerung der Mittel (3) zur Phasenkorrektur des Strahls umfasst, um einen Strahl zu erzeugen, der nach der räumlichen Filterung minimierte Aberrationen aufweist, **dadurch gekennzeichnet, dass** die Vorrichtung ferner Mittel (9) umfasst, um die Mittel zur räumlichen Filterung (4) in einer Richtung, die zu der Richtung des aus den Mitteln zur räumlichen Filterung (4) kommenden Strahls im Wesentlichen orthogonal ist, zu verschieben.

9. Schutzvorrichtung (D, D') nach einem der Ansprüche 7 oder 8, **dadurch gekennzeichnet, dass** sie ferner Mittel (10) zum Erfassen einer Beschädigung der Mittel zur räumlichen Filterung umfasst.

10. Schutzvorrichtung nach Anspruch 9, **dadurch gekennzeichnet, dass** die Beschädigungserfassungsmittel (10) eine Kamera zur Anzeige der Mittel zur räumlichen Filterung umfassen.

11. Schutzvorrichtung (D, D') nach einem der Ansprüche 7 bis 10, **dadurch gekennzeichnet, dass** sie ferner Mittel (8) zur Entnahme eines Anteils des Laserstrahls nach den Phasenkorrekturmitteln (2) und zum Leiten des Anteils zu den Aberrationsmessmitteln (7) umfasst.

12. Schutzvorrichtung (D, D') nach einem der Ansprüche 7 bis 11, **dadurch gekennzeichnet, dass** die Phasenkorrekturmittel (3) einen verformbaren Spiegel (30) umfassen.

13. Schutzvorrichtung nach einem der Ansprüche 7 bis 10, **dadurch gekennzeichnet, dass** die Phasenkorrekturmittel am Eingang von Verstärkungsmitteln angeordnet sind und die Mittel zur räumlichen Filterung sowie die Aberrationsmessmittel am Ausgang der Verstärkungsmittel angeordnet sind.

14. Optisches System mit Leistungslaser (S), umfassend Mittel (1) zum Erzeugen eines Laserstrahls, Mittel (2) zum Verstärken des Laserstrahls, Mittel (4) zum räumlichen Filtern des verstärkten Laserstrahls, Mittel (5) zum Fokussieren des räumlich gefilterten Strahls auf ein Ziel (6), Mittel (3) zur Phasenkorrektur vor den Mitteln zur räumlichen Filterung (4), Mittel (7) zur Aberrationsmessung des Strahls, die den Phasenkorrekturmitteln (3) nachgeschaltet sind, sowie Mittel zur Steuerung der Mittel zur Phasenkorrektur des Strahls, um einen Strahl zu erzeugen, der nach der räumlichen Filterung minimierte Aberrationen aufweist, **dadurch gekennzeichnet, dass** die Aberrationsmessmittel (7) den Mitteln zur räumlichen Filterung (4) vorgeschaltet sind.

15. Optisches System mit Leistungslaser (S), umfassend Mittel (1) zum Erzeugen eines Laserstrahls, Mittel (2) zum Verstärken des Laserstrahls, Mittel (4) zum räumlichen Filtern des verstärkten Laserstrahls, Mittel (5) zum Fokussieren des räumlich gefilterten Strahls auf ein Ziel (6), Mittel (3) zur Phasenkorrektur vor den Mitteln zur räumlichen Filterung (4), Mittel (7) zur Aberrationsmessung des Strahls, die den Mitteln zur räumlichen Filterung (4) nachgeschaltet sind, sowie Mittel zur Steuerung der Mittel zur Phasenkorrektur des Strahls, um einen Strahl zu erzeugen, der nach der räumlichen Filterung minimierte Aberrationen aufweist, **dadurch gekennzeichnet, dass** das System ferner Mittel (9) umfasst, um die Mittel zur räumlichen Filterung (4) in einer Richtung, die zu der Richtung des die Mittel zur räumlichen Filterung (4) durchquerenden Strahls im Wesentlichen orthogonal ist, zu verschieben.

16. System (S) nach Anspruch 14 oder 15, **dadurch gekennzeichnet, dass** es ferner Mittel zum Verstärken des aus den Mitteln zur räumlichen Filterung kommenden Laserstrahls umfasst.

17. System (S) nach einem der Ansprüche 14 bis 16, **dadurch gekennzeichnet, dass** es ferner Mittel zum vorübergehenden Komprimieren des aus den Mitteln zur räumlichen Filterung kommenden Laserstrahls umfasst.

18. System (S) nach einem der Ansprüche 14 bis 17, **dadurch gekennzeichnet, dass** es ferner Mittel (10) zum Erfassen einer Beschädigung der Mittel zur räumlichen Filterung umfasst.

19. System (S) nach einem der Ansprüche 14 bis 18, **dadurch gekennzeichnet, dass** es ferner Mittel (8) zur Entnahme eines Anteils des Laserstrahls nach den Phasenkorrekturmitteln (3) und zum Leiten dieses entnommenen Anteils zu den Aberrationsmessmitteln (7) umfasst.

20. Durchführung des Schutzverfahrens nach einem der Ansprüche 1 bis 6, in einer Protonentherapieeinrichtung.

21. Durchführung des Schutzverfahrens nach einem der Ansprüche 1 bis 6, in einer Versuchseinrichtung mit hoher Spitzenleistung.

## Claims

1. Process for shielding a high-power laser apparatus (S) in which a laser beam is generated and then amplified in at least a first amplification stage, comprising spatial filtering (4) of said amplified laser beam, phase correction (3) carried out on the laser beam prior to its spatial filtering, and measurement of aberrations (7) carried out on the laser beam after correction of its phase, the phase correction of the beam being controlled so as to produce a beam with minimized aberrations after spatial filtering, **characterized in that** the measurement of aberrations (7) is carried out before the spatial filtering (4) of the laser beam.

2. Process for shielding a high-power laser apparatus (S) in which a laser beam is generated and then amplified in at least a first amplification stage, comprising spatial filtering (4) of said amplified laser beam, phase correction (3) carried out on the laser beam prior to its spatial filtering, and measurement of aberrations (7) carried out on the laser beam after the spatial filtering (4) of the laser beam, the phase correction of the beam being controlled so as to produce a beam with minimized aberrations after spatial filtering, **characterized in that** the process additionally comprises a translation (9) of spatial filtering means (4) in a direction approximately orthogonal to the direction of the spatially filtered beam, so that said spatial filtering means (4) are withdrawn from said beam to permit measurement of the aberrations (7) of the wave front.

3. Process of shielding according to claim 1 or 2, **characterized in that** it additionally comprises a sampling (8) of a fraction of the corrected laser beam, which is then subjected to a measurement of aberrations (7).

4. Process of shielding according to any one of the preceding claims, **characterized in that** the spatial filtering (4) of the laser beam is provided by a filter pinhole the size of which is selected so as to eliminate, from said beam, the aberrations at spatial frequencies that can give rise, by propagation, to surges in said beam.

5. Process of shielding according to claim 4, **characterized in that** the size of the filter pinhole (4) is selected to be approximately less than 10 times the diffraction limit of the laser beam.

6. Process of shielding according to either of claims 4 or 5, **characterized in that** it additionally comprises detection of degradation of the filter pinhole.

7. Device (D, D') for shielding a high-power laser apparatus (S) comprising means (1) for generating a laser beam and first means (2) for amplifying this laser beam, this device comprising spatial filtering means (4) receiving said amplified laser beam, means (3) for correcting the phase of the beam arranged upstream of said spatial filtering means (4), and means (7) for measuring aberration arranged downstream of said phase correction means (3), and means for controlling the means (3) for correcting the phase of the beam, so as to produce a beam with minimized aberrations after spatial filtering, **characterized in that** the means for measuring aberration (7) are arranged upstream of the spatial filtering means (4).

8. Device (D, D') for shielding a high-power laser apparatus (S) comprising means (1) for generating a laser beam and first means (2) for amplifying this laser beam, this device comprising spatial filtering means (4) receiving said amplified laser beam, means (3) for correcting the phase of the beam arranged upstream of said spatial filtering means (4), and means (7) for measuring aberration arranged downstream of the spatial filtering means (4), and means for controlling the means (3) for correcting the phase of the beam, so as to produce a beam with minimized aberrations after spatial filtering, **characterized in that** the device additionally comprises means (9) for effecting translation of the spatial filtering means (4) in a direction approximately orthogonal to the direction of the beam coming from said spatial filtering means (4).

9. Shielding device (D, D') according to claim 7 or 8, **characterized in that** it additionally comprises means (10) for detecting degradation of the spatial filtering means.

10. Shielding device according to claim 9, **characterized in that** the means for detecting degradation (10) comprise a camera for imaging the spatial filtering means.

11. Shielding device (D, D') according to any one of claims 7 to 10, **characterized in that** it additionally comprises means (8) for sampling a fraction of the laser beam downstream of said phase correction means (2) and directing said fraction towards the means for measuring aberration (7).

12. Shielding device (D, D') according to any one of claims 7 to 11, **characterized in that** the phase correction means (3) comprise a deformable mirror (30).

13. Shielding device according to any one of claims 7 to 10, **characterized in that** the phase correction means are arranged at the entrance of the amplification means and the spatial filtering means and the means for measuring aberration are arranged at the exit of said amplification means.

14. High-power-laser optical system (S), comprising means (1) for generating a laser beam, means (2) for amplifying said laser beam, means (4) for spatially filtering said amplified laser beam, means (5) for focusing said spatially filtered beam onto a target (6), phase correction means (3) upstream of said spatial filtering means (4), and means (7) for measuring the aberration of the beam arranged downstream of said phase correction means (3), and means for controlling the means for correcting the phase of the beam so as to produce a beam with minimized aberrations after spatial filtering, **characterized in that** the means for measuring aberration (7) are arranged upstream of the spatial filtering means (4).

15. High-power-laser optical system (S), comprising means (1) for generating a laser beam, means (2) for amplifying said laser beam, means (4) for spatially filtering said amplified laser beam, means (5) for focusing said spatially filtered beam onto a target (6), phase correction means (3) upstream of said spatial filtering means (4), and means (7) for measuring the aberration of the beam arranged downstream of the spatial filtering means (4), and means for controlling the means for correcting the phase of the beam so as to produce a beam with minimized aberrations after spatial filtering, **characterized in that** the system additionally comprises means (9) for effecting translation of the spatial filtering means (4) in a direction approximately orthogonal to the direction of the beam coming from said spatial filtering means (4).

16. System (S) according to claim 14 or 15, **characterized in that** it additionally comprises means for amplifying the laser beam coming from the spatial filtering means.

17. System (S) according to one of claims 14 to 16, **characterized in that** it additionally comprises means for temporally compressing the laser beam coming from the spatial filtering means.

18. System (S) according to one of claims 14 to 17, **characterized in that** it additionally comprises means (10) for detecting a degradation of the spatial filtering means.

19. System (S) according to any one of claims 14 to 18, **characterized in that** it additionally comprises means (8) for sampling a fraction of the laser beam downstream of said phase correction means (3), and for directing this sampled fraction towards the means for measuring aberration (7).

20. Application of the process of shielding according to any one of claims 1 to 6, in a proton therapy apparatus.

21. Application of the process of shielding according to any one of claims 1 to 6, in an installation for experimentation at high peak power.
